# FASCICULE DE BREVET EUROPEEN

(11) **EP 1 696 252 B1**
(45) Date de publication et mention de la délivrance du brevet: **17.08.2011**
(21) Numéro de dépôt: 06300145.7
(22) Date de dépôt: 16.02.2006
(51) Int. Cl.: G02B 6/38

(54) **Connecteur élctro-optique multicontacts modulaire**
Modularer elektro-optischer Vielfachstecker
Modular electro-optic multiway-connector

(30) Priorité: 24.02.2005 FR 0550510
(43) Date de publication de la demande: 30.08.2006
(73) Titulaire: RADIALL, 93116 Rosny-Sous-Bois (FR)
(72) Inventeur: Demaret, Emmanuel, 37100 Tours (FR); Kaes, Luc, Tempe, AZ 84284 (US); van der Mee, Marnix, 37270 Montlouis sur Loire (FR)
(74) Mandataire: Leszczynski, André

(56) Documents cités:
- EP-A- 0 709 699
- EP-A- 0 847 107
- EP-A- 1 102 097
- US-A- 5 577 146
- US-A- 5 757 998
- US-A1- 2003 063 397
- US-A1- 2003 194 914
- US-A1- 2004 175 079
- US-B1- 6 450 822
- CONRAD HAUPTKATALOG 2004, août 2003 (2003-08),
- IBM: USER'S REFERENCE - THINKPAD T20, T21, 28 janvier 2002 (2002-01-28),

## Description

La présente invention a pour objet un connecteur multicontacts.

L'invention concerne plus particulièrement le domaine des équipements embarqués à bord d'un aéronef.

On connaît par le brevet US 5 930 428 un système embarqué comportant un équipement recevant un module amovible LRU (en anglais, *Line Replaceable Unit*)*,* ce module LRU comprenant un connecteur sur lequel est monté un dispositif opto-électronique actif.

US 2003/0194914 A1 décrit un connecteur alvéolaire multicontacts à structure modulaire, chacun des modules comportant une enceinte munie extérieurement de moyens de connexion et intérieurement de moyens de commutation électroniques, électriques, optiques ou pneumatiques.

Ce système connu permet notamment d'éviter la présence de fibres de raccordement entre le connecteur et un dispositif opto-électronique associé disposé sur une carte de circuit imprimé à l'arrière du connecteur, et donc de réduire l'encombrement du système.

De manière générale, les systèmes connus peuvent présenter les inconvénients suivants :
- les connecteurs sont adaptés à des applications spécifiques, chaque type de connecteur ayant un nombre prédéfini de convertisseurs opto-électroniques disposés à des emplacements spécifiques,
- un connecteur présentant un nombre relativement élevé de convertisseurs opto-électroniques reçoit d'autant moins d'éléments de contact du fait de la taille et de la forme des convertisseurs opto-électroniques,
- le montage d'un convertisseur opto-électronique dans le connecteur est relativement complexe et nécessite d'être réalisé en général chez le fabricant du connecteur.

L'invention vise notamment à pallier les inconvénients ci-dessus.

L'invention a pour objet connecteur multicontacts, tel que défini dans la revendication 1.

Selon l'invention, le montage et le démontage des éléments de contact peuvent être réalisés à l'aide d'outils standards.

Dans un exemple de mise en oeuvre de l'invention, le corps présente une dimension longitudinale mesurée entre les deux extrémités longitudinales, supérieure à la plus grande dimension transversale du corps.

La terminaison électrique peut comporter par exemple au moins une broche électriquement conductrice. Cette broche peut être apte à être connectée à une piste conductrice d'une carte de circuit imprimé, notamment par soudure ou autre, ou à un élément de contact électrique d'un connecteur complémentaire.

Les éléments de contact du connecteur selon l'invention peuvent être de type mâle, ou respectivement femelle, destinés à s'accoupler avec d'autres éléments de contact femelle, ou respectivement mâle.

Grâce à l'invention, selon le type d'application auquel le connecteur est destiné, il est possible de monter dans le connecteur un nombre variable de premiers éléments de contact comportant un convertisseur opto-électronique et/ou d'éléments de contact sans convertisseur.

Il est possible par exemple, si on le souhaite, de remplacer un premier élément de contact avec un convertisseur opto-électronique par un élément de contact purement électrique ou purement optique.

Le connecteur selon l'invention présente ainsi une modularité permettant de l'adapter à un type d'application prédéterminé.

Le ou les deuxièmes éléments de contact avec uniquement des terminaisons électriques, ou respectivement optiques, peuvent être du type standard.

De plus, la densité d'éléments de contact sur le connecteur peut être indépendante du nombre de convertisseurs opto-électroniques car les premier et deuxième éléments de contact peuvent présenter la même forme extérieure et être utilisés indifféremment l'un à la place de l'autre sur le connecteur.

Les alvéoles réalisées sur l'insert sont de préférence toutes identiques.

Grâce à l'invention, l' insert peut être utilisé en liaison avec un nombre variable d'éléments de contact comportant un convertisseur opto-électronique, lequel insert peut être un insert de type standard ne nécessitant pas d'adaptation particulière en fonction du nombre de convertisseurs.

Dans un exemple de mise en oeuvre de l'invention, le premier élément de contact est disposé sur le support de manière à ce que son extrémité sur laquelle s'étend la terminaison électrique serve pour la connexion électrique avec un élément de contact électrique d'un connecteur complémentaire.

En variante, le premier élément de contact est disposé sur le support de manière à ce que son extrémité sur laquelle s'étend la terminaison optique serve pour la connexion optique avec un élément de contact optique d'un connecteur complémentaire.

Le cas échéant, l'élément de contact comportant un convertisseur opto-électronique est agencé pour pouvoir être monté ou démonté soit par une face avant, soit par une face arrière du support.

Le corps du premier élément de contact peut comporter, si on le souhaite :
- des portions isolantes avant et arrière,
- une carte de circuit imprimé disposée entre les portions isolantes avant et arrière, le convertisseur opto-électronique étant fixé sur la carte de circuit imprimé,
- un manchon extérieur, électriquement conducteur, dans lequel les portions isolantes et la carte de circuit imprimé sont au moins partiellement introduites.

Le premier élément de contact peut comporter au moins une ligne d'alimentation électrique du convertisseur opto-électronique, distinct du ou des terminaisons électriques ou, en variante, passant par une ou plusieurs terminaisons électriques.

Le premier élément de contact peut comporter, le cas échéant, quatre terminaisons électriques disposées régulièrement autour d'un axe longitudinal de l'élément de contact.

Le connecteur peut être de type mâle ou femelle.

Le connecteur peut être du type rectangulaire ou circulaire.

L'invention a encore pour objet un équipement destiné par exemple à être monté sur un châssis, de préférence de manière amovible, l'équipement étant par exemple un module LRU amovible destiné à être embarqué à bord d'un aéronef, l'équipement comportant :
- un connecteur tel que défmi ci-dessus,
- éventuellement une carte de circuit imprimé à laquelle au moins un élément de contact du connecteur est relié, notamment par soudure d'une broche de l'élément de contact ou par l'intermédiaire d'un câble électrique serti sur une broche de l'élément de contact, la carte de circuit imprimé étant par exemple distincte du connecteur.

L'équipement peut comporter un panneau à travers lequel s'étend le connecteur.

L'équipement peut être agencé pour être monté sur un élément autre qu'un châssis, cet élément étant par exemple un connecteur relié à un ou plusieurs câbles électriques ou optiques.

L'équipement peut encore être agencé pour pouvoir être monté sur un connecteur solidaire d'une tôle ou d'un panneau de l'aéronef.

L'invention sera mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, un système conforme à l'invention,
- la figure 2 représente, schématiquement et partiellement, un système conforme à une variante de mise en oeuvre de l'invention,
- la figure 3 est une vue schématique et partielle d'un élément de contact conforme à l'invention, comportant un convertisseur opto-électronique,
- la figure 4 représente, schématiquement et partiellement, un connecteur multicontacts conforme à l'invention,
- la figure 5 est une vue schématique et partielle d'un élément de contact conforme à un autre exemple de mise en oeuvre de l'invention,
- la figure 6 représente, schématiquement et partiellement, un connecteur multicontacts conforme à une variante de l'invention,
- la figure 7 représente, schématiquement et partiellement, un ensemble comportant un élément de contact conforme à l'invention,
- la figure 8 représente, schématiquement et partiellement, en perspective, un élément de contact conforme à l'invention,
- la figure 9 représente, schématiquement et partiellement, l'élément de contact de la figure 8, sans le manchon extérieur,
- la figure 10 représente, schématiquement et partiellement, les éléments de la figure 9, vus depuis une face opposée, et
- la figure 11 est vue schématique et partielle d'un élément de contact conforme à un autre exemple de mise en oeuvre de l'invention.

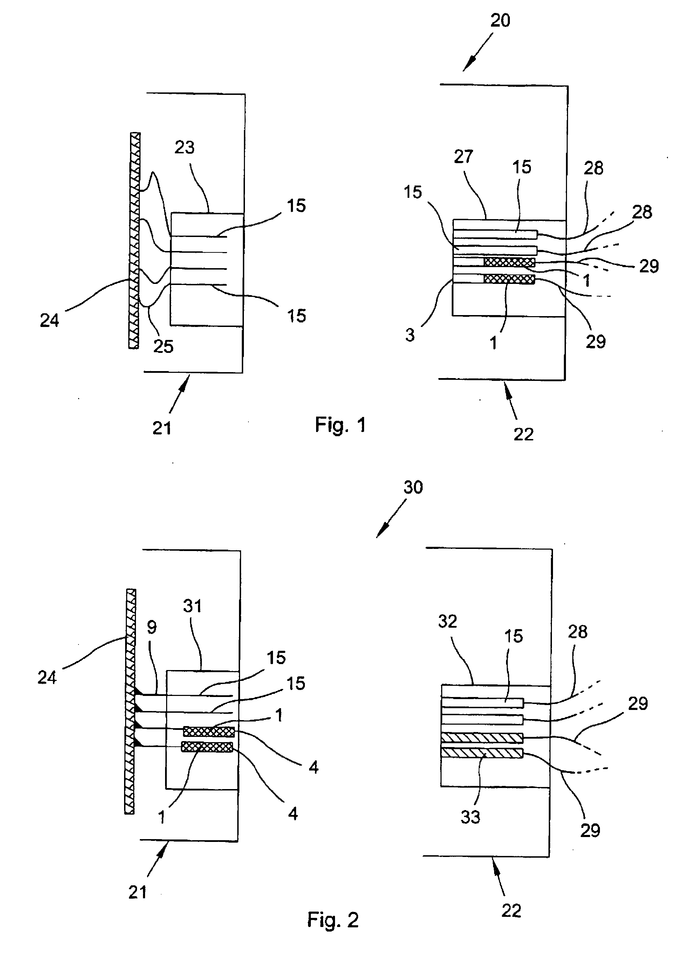

On a représenté sur la figure 1 un système 20 conforme à l'invention, comportant un équipement 21 destiné à être monté dans un châssis 22.

L'équipement 21 comprend un connecteur 23 sur lequel sont montés des éléments de contact électriques 15 standards.

Les éléments de contact électrique 15 sont reliés à une carte de circuit imprimé 24 de l'équipement 21 par l'intermédiaire de câbles électriques 25 sertis sur les éléments de contact 15.

En variante, chaque élément de contact électrique 15 peut comporter une ou plusieurs broches électriquement conductrices soudées directement sur une ou plusieurs pistes conductrices de la carte de circuit imprimé 24.

Le châssis 22 comporte un connecteur multicontacts 27 conforme à l'invention, pouvant être accouplé au connecteur 23 de l'équipement 21.

Le connecteur 27 reçoit une pluralité d'éléments de contact électriques 15 aptes à être connectés à des éléments de contact électriques 15 du connecteur 23.

Le connecteur 27 reçoit en outre une pluralité d'éléments de contact 1 comportant chacun un convertisseur opto-électronique 8.

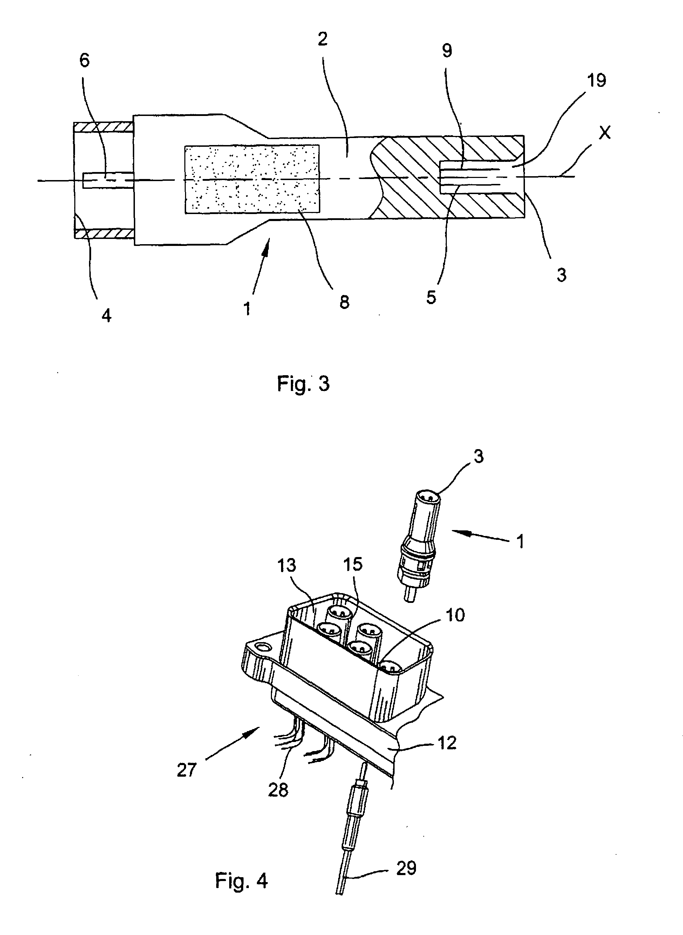

On a représenté sur la figure 3 un tel élément de contact 1 conforme à l'invention, comportant un corps 2 sensiblement tubulaire d'axe X, avec des extrémités longitudinales 3 et 4.

Dans l'exemple considéré, le corps 2 présente une dimension longitudinale mesurée entre les deux extrémités longitudinales 3 et 4, supérieure à la plus grande dimension transversale du corps 2.

L'extrémité 3 est pourvue d'au moins une terminaison électrique 5 formée par une broche électriquement conductrice, logée par exemple dans un renfoncement 19 du corps 2, et l'extrémité 4 est pourvue d'une terminaison optique 6.

Le corps 2 loge un convertisseur opto-électronique 8 agencé pour convertir un signal optique, ou respectivement électrique, provenant de la terminaison optique 6, ou respectivement électrique 5, en un signal électrique, ou respectivement optique, envoyé vers la terminaison électrique 5, ou respectivement optique 6.

L'extrémité 3 peut être pourvue de broches 9 d'alimentation électrique du convertisseur opto-électronique 8.

Dans une variante non illustrée, l'extrémité 3 comporte cinq broches électriques.

L'élément de contact 1 est destiné à être connecté à un autre élément de contact d'un connecteur multicontacts complémentaire.

Le corps 2 est agencé pour pouvoir être monté de manière amovible dans une alvéole d'un insert isolant 10 du connecteur multicontacts 27, comme illustré sur la figure 4.

Le connecteur multicontacts 27 comporte un boîtier 12 présentant un logement 13 dans lequel est monté l'insert 10 comportant une pluralité d'alvéoles.

Les alvéoles de l'insert 10 peuvent être toutes identiques et l'élément de contact 1 présenter une forme extérieure identique à celle d'éléments de contact électriques standards 15 comportant uniquement des terminaisons électriques.

Ainsi, selon le type d'application auquel le connecteur 27 est destiné, il est possible de munir ce connecteur 27 avec un nombre prédéterminé d'éléments de contact 1 comportant un convertisseur opto-électronique 8 et un nombre prédéfini d'éléments de contact purement électriques 15 et/ou optiques standards.

Comme on peut le constater, l'invention permet de moduler le connecteur 27 en fonction de l'application à laquelle il est destiné, sans avoir notamment à modifier l'insert 10.

Le montage et le démontage de l'élément de contact 1 s'effectuent de la même manière que pour un élément de contact 15 standard.

Dans une variante, l'insert 10 peut comporter au moins deux alvéoles de types différents, par exemple un premier type d'alvéoles associé à des éléments de contact purement électriques et un deuxième type associé à des éléments de contact purement optiques.

Les éléments de contact électriques 15 du connecteur 27 sont reliés à des câbles électriques 28 et les éléments de contact 1 à des fibres optiques 29, comme illustré sur la figure 1.

Les éléments de contact 1 comportant un convertisseur opto-électronique 8 sont destinés à s'accoupler avec des éléments de contact électriques 15 du connecteur 23.

A cet effet, chaque élément de contact 1 comporte à son extrémité 3 au moins une terminaison électrique destinée à s'accoupler avec un élément de contact électrique 15 du connecteur 23.

Les éléments de contact électriques 15 sont soit de type mâle ou femelle, coopérant, selon le cas, avec un élément de contact électrique 15 femelle ou mâle.

Comme on peut le constater, le système 20 permet des connexions entre les connecteurs 23 et 27 uniquement du type électrique, ce qui peut faciliter les différentes opérations de montage, permettant notamment de ne pas avoir à nettoyer les différentes interfaces lors du montage ou du démontage de l'équipement 21.

On a représenté sur la figure 2 un système 30 conforme à une variante de mise en oeuvre de l'invention.

L'équipement 21 comporte un connecteur 31 sur lequel sont montés des éléments de contact électriques 15 présentant une ou plusieurs broches 9 soudées sur la carte de circuit imprimé 24.

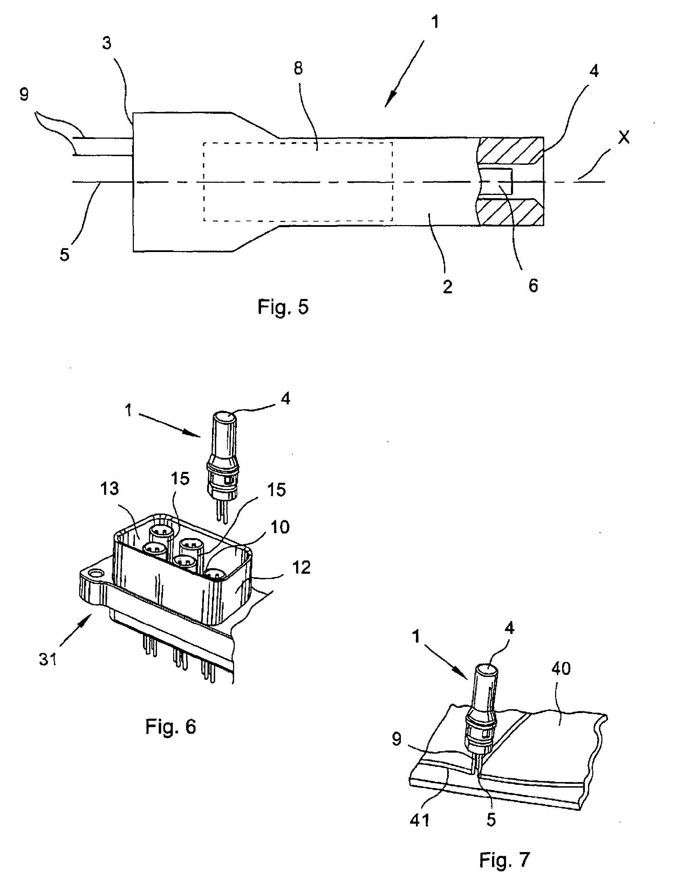

Le connecteur multicontacts 31 reçoit en outre une pluralité d'éléments de contact 1 comprenant un convertisseur opto-électronique 8, comme illustré sur la figure 6.

Le châssis 22 comporte un connecteur multicontacts 32 sur lequel sont montés une pluralité d'éléments de contact électriques 15 et une pluralité d'éléments de contact optiques 33 comportant uniquement des terminaisons optiques.

Les éléments de contact 1 sont agencés de manière à ce que l'extrémité 4 vienne s'accoupler avec un élément de contact optique 33 de l'élément de connecteur 32, comme illustré sur les figures 5 et 6.

Bien entendu, l'invention n'est pas limitée aux exemples de mise en oeuvre qui viennent d'être décrits.

Le corps 2 de l'élément de contact 1 peut présenter une forme différente, par exemple avec une section transversale non circulaire.

Le connecteur 27 peut être du type rectangulaire, comme illustré sur la figure 4, ou, en variante, de type circulaire.

L'élément de contact 11 peut par exemple être solidarisé à une carte de circuit imprimé 40, les broches 5 et/ou 9 étant soudées sur cette carte 40, en contact avec des pistes conductrices 41 de la carte 40, comme illustré sur la figure 7. L'élément de contact 11 n'est pas maintenu par l'intermédiaire d'un connecteur.

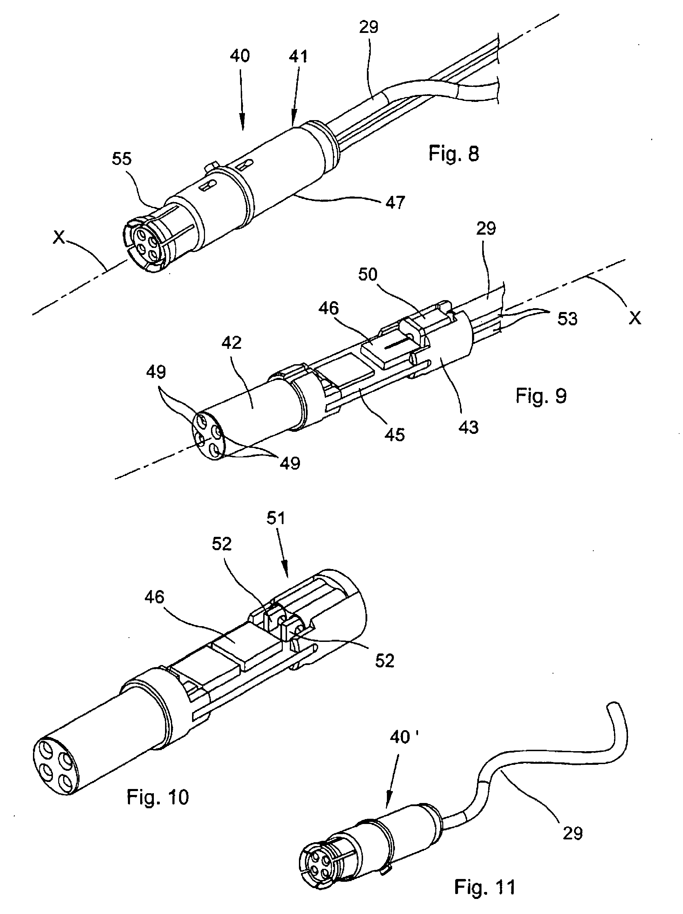

On va maintenant décrire, en référence aux figures 8 à 10, un élément de contact 40 conforme à un exemple de mise en oeuvre de l'invention.

Cet élément de contact 40 comporte un corps 41 comprenant :
- des portions isolantes avant 42 et arrière 43,
- une carte de circuit imprimé 45 disposée entre les portions isolantes avant 42 et arrière 43 et fixée à celles-ci, cette carte 45 portant un convertisseur opto-électronique 46,
- un manchon extérieur 47, électriquement conducteur, dans lequel les portions isolantes 42 et 43 et la carte de circuit imprimé 45 sont introduites.

La portion isolante avant 42 comporte quatre canaux 49 s'étendant parallèlement à l'axe longitudinal X de l'élément de contact 40, et disposés régulièrement autour de cet axe X.

Ces canaux 49 sont destinés à recevoir chacun une broche, non représentée.

Ces broches sont reliées au convertisseur opto-électronique 46 et définissent des terminaisons électriques au sens de l'invention.

Dans l'exemple considéré, les terminaisons électriques sont agencées pour fonctionner par paire, deux terminaisons étant destinées à la réception de signaux et les deux autres à l'émission de signaux.

La portion isolante arrière 43 porte une terminaison optique 50 reliée à une fibre optique 29.

L'alimentation électrique du convertisseur opto-électronique 46 est assurée par une ligne d'alimentation électrique 51 comportant une ou plusieurs pattes de contact 52 reliées, d'une part, au convertisseur opto-électronique 46 et, d'autre part, à un ou plusieurs câbles d'alimentation électrique 53, comme illustré sur les figures 9 et 10.

Le manchon électriquement conducteur 47 comporte, à l'avant, une paroi d'assemblage 55 présentant des fentes longitudinales afin de lui permettre de se déformer de manière élastique, au moment de l'accouplement de l'élément de contact 40 avec un élément de contact complémentaire.

Le manchon 47 présente une forme généralement cylindrique de révolution d'axe X.

Dans l'exemple qui vient d'être décrit, l'alimentation électrique du convertisseur opto-électronique 46 nécessite des câbles électriques 53 supplémentaires.

En variante, comme illustré sur la figure 11, l'élément de contact 40' est dépourvu de câbles d'alimentation électrique 53 pour le convertisseur opto-électronique.

Cette alimentation électrique est assurée par l'intermédiaire d'une ou plusieurs terminaisons électriques qui servent ainsi à la fois pour la réception et/ou l'émission de signaux et l'alimentation électrique du convertisseur opto-électronique.

L'élément de contact 40 ou 40' permet des liaisons électriques de type cuivre, à l'instar d'éléments de contact connus.

L'utilisation d'une liaison optique permet notamment de réduire le poids de l'élément de contact.

## Revendications

1. Connecteur multicontacts (27 ; 31) comportant :
- un boîtier (12) présentant un logement dans lequel est monté un insert (10), cet insert (10) comportant au moins deux alvéoles agencées pour recevoir chacune un élément de contact,
- au moins un premier élément de contact (1), comportant un corps (2) ayant deux extrémités longitudinales (3 ; 4), au moins une terminaison optique (6) à l'une (4) des extrémités du corps, au moins une terminaison électrique (5) à l'autre (3) des extrémités du corps, et un convertisseur opto-électronique (8) logé au moins partiellement dans le corps (2)
- au moins un deuxième élément de contact (15) avec uniquement des terminaisons électriques, ou respectivement optiques,
les premier et deuxième éléments de contact (1, 15) présentant sensiblement la même forme extérieure et peuvent être montés indifféremment dans l'une ou l'autre des alvéoles de l'insert (10).

2. Connecteur selon la revendication 1, **caractérisé par le fait que** le corps (2) du premier élément de contact (1) présente une dimension longitudinale mesurée entre les deux extrémités longitudinales (3 ; 4), supérieure à la plus grande dimension transversale du corps.

3. Connecteur selon l'une des revendications 1 et 2, **caractérisé par le fait que** la terminaison électrique (5) comporte au moins une broche électriquement conductrice (5).

4. Connecteur selon l'une quelconque des revendications précédentes, **caractérisé par le fait que** le corps (2) du premier élément de contact (1) comporte :
- des portions isolantes avant et arrière,
- une carte de circuit imprimé disposée entre les portions isolantes avant et arrière, le convertisseur opto-électronique étant fixé sur la carte de circuit imprimé,
- un manchon extérieur, électriquement conducteur, dans lequel les portions isolantes et la carte de circuit imprimé sont au moins partiellement introduites.

5. Connecteur selon l'une quelconques des revendications précédentes, **caractérisé par le fait que** le premier élément de contact (1) comporte au moins une ligne d'alimentation électrique du convertisseur opto-électronique (8).

6. Connecteur selon l'une quelconque des revendications précédentes, **caractérisé par le fait que** le premier élément de contact (1) comporte quatre terminaisons électriques disposées régulièrement autour d'un axe longitudinal de l'élément de contact.

7. Équipement (21) destiné en particulier à être monté sur un châssis (22), de préférence de manière amovible, l'équipement étant par exemple un module LRU amovible destiné à être embarqué à bord d'un aéronef, l'équipement comportant un connecteur (27 ; 31) selon l'une quelconque des revendications précédentes.

8. Equipement selon la revendication 7, **caractérisé par le fait qu'**il comporte une carte de circuit imprimé (24) à laquelle au moins un élément de contact du connecteur est relié, notamment par soudure d'une broche de l'élément de contact ou par l'intermédiaire d'un câble électrique (25).

## Claims

1. A multicontact connector (27; 31) comprising:
a case (12) including a housing receiving an insert (10), this insert (10) comprising at least two slots each arranged to receive a contact element,
- at least a first contact element (1), comprising a body (2) having two longitudinal ends (3 ; 4), at least one optical termination (6) at one (4) of the ends of the body at least one electrical termination (5) at the other end (3) of the body, and an optoelectronic converter (8)housed at least in part in the body
- at least one second contact element (15)with electrical terminations only or respectively with optical terminations only,
wherein the first and second contact elements (1; 15) have substantially the same outside shape and can be mounted interchangeably in one or another of the slots of the insert (10).

2. A connector according to claim 1, **characterized in that** the body (2) of the first contact element (1) presents a longitudinal dimension measured between the two longitudinal ends (3 ; 4) that is greater than the longest transverse dimension of the body.

3. A connector according to one of claims 1 and 2, **characterized in that** the electrical termination (5) includes at least one electrically conductive pin (5),

4. A connector according to any one of the preceding claims, **characterized in that** the body (2) of the first contact element (1) comprises:
- front and rear.insulating portions,
- a printed circuit card situated between the front and rear insulating portions, the optoelectronic converter being fixed on the printed circuit card,
- an outer electrically conductive sleeve in which the insulating portions and the printed circuit card are at least partially engaged.

5. A connector according to any one of the preceding claims, **characterized in that** the first contact element (1) comprises at least one power supply line for the optoelectronic converter (8).

6. A connector according to any one of the preceding claims, **characterized in that** the first contact element (1) comprises four electrical terminations situated regularly about a longitudinal axis of the contact element.

7. Equipment (21) intended to be mounted in particular on a chassis, preferably in removable manner, the equipment being constituted, for example, by a removable LRU module for mounting on board an aircraft, the equipment including a connector (27; 31) according to any one of the preceding claims.

8. Equipment according to claim 7, **characterized in that** it includes a printed circuit card (24) to which at least one contact element of the connector is connected, in particular by soldering a pin of the contact element or by means of an electrical cable (25).

## Patentansprüche

1. Vielfachstecker (27; 31) mit:
- einem Gehäuse (12), das eine Aufnahme bildet, in der ein Einsatz (10) montiert ist, wobei dieser Einsatz (10) wenigstens zwei Höhlungen aufweist, die dazu ausgebildet sind, jeweils ein Kontaktelement aufzunehmen,
- wenigstens einem ersten Kontaktelement (1), das einen Körper (2) mit zwei in Längsrichtung weisenden Enden (3; 4), wenigstens einen optischen Abschluss (6) an einem (4) der Enden des Körpers, wenigstens einen elektrischen Abschluss (5) am anderen (3) der Enden des Körpers, und einen opto-elektronischen Wandler (8) ausweist, der zumindest zum Teil in dem Körper (2) untergebracht ist,
- wenigstens einem zweiten Kontaktelement (15) mit ausschließlich elektrischen Abschlüssen oder ausschließlich optischen Abschlüssen,
wobei die ersten und zweiten Kontaktelemente (1, 15) im wesentlichen dieselbe äußere Gestalt haben und gleichermaßen in der einen oder der anderen der Höhlungen des Einsatzes (10) montiert werden können.

2. Stecker nach Anspruch 1, **dadurch gekennzeichnet, dass** der Körper (2) des ersten Kontaktelements (1) in Längsrichtung, zwischen den beiden Enden (3; 4) gemessen, eine Abmessung aufweist, die größer ist als die größte Querabmessung des Körpers.

3. Stecker nach einem der Ansprüche 1 und 2, **dadurch gekennzeichnet, dass** der elektrische Abschluss (5) wenigstens einen elektrisch leitenden Kontaktstift (5) aufweist.

4. Stecker nach einem der vorstehenden Ansprüche, **dadurch gekennzeichnet, dass** der Körper (2) des ersten Kontaktelements (1) aufweist:
- vordere und hintere isolierende Bereiche,
- eine gedruckte Schaltungskarte, die zwischen den vorderen und hinteren isolierenden Bereichen angeordnet ist, wobei der opto-elektronische Wandler auf der gedruckten Schaltungskarte fixiert ist,
- eine elektrisch leitende äußere Hülse, in welche die isolierenden Bereiche und die gedruckte Schaltungskarte wenigstens zum Teil eingeführt sind.

5. Stecker nach einem der vorstehenden Ansprüche, **dadurch gekennzeichnet, dass** das erste Kontaktelement (1) wenigstens eine elektrische Speiseleitung für den opto-elektronischen Wandler (8) aufweist.

6. Stecker nach einem der vorstehenden Ansprüche, **dadurch gekennzeichnet, dass** das erste Kontaktelement (1) vier elektrische Abschlüsse aufweist, die gleichmäßig um eine Längsachse des Kontaktelements herum angeordnet sind.

7. Ausrüstung (21), die insbesondere dazu bestimmt ist, an einem Gestell (22) montiert zu werden, vorzugsweise lösbar, welche Ausrüstung z.B. ein tragbares LRU-Modul (Black Box) ist, das dazu bestimmt ist, an Bord eines Luftfahrzeugs mitgenommen zu werden, welche Ausrüstung einen Stecker (27; 31) nach einem der vorstehenden Ansprüche aufweiset.

8. Ausrüstung nach Anspruch 7, **dadurch gekennzeichnet, dass** sie eine gedruckte Schaltungskarte (24) aufweiset, mit der wenigstens ein Kontaktelement des Steckers verbunden ist, insbesondere durch Anlöten eines Stiftes des Kontaktelements oder über ein elektrisches Kabel (25).
